# EUROPÄISCHE PATENTSCHRIFT

(11) **EP 3 865 947 B1**
(45) Veröffentlichungstag und Bekanntmachung des Hinweises auf die Patenterteilung: **23.09.2026**
(21) Anmeldenummer: 21155388.8
(22) Anmeldetag: 05.02.2021
(51) Int. Cl.: G03H 1/00, G03H 1/02, G03H 1/04, G03H 1/20

(54) **HOLOGRAMMBELICHTUNGSMASCHINE UND VERFAHREN ZUM JUSTIEREN EINER HOLOGRAMMBELICHTUNGSMASCHINE**
HOLOGRAM EXPOSURE MACHINE AND METHOD OF ADJUSTING A HOLOGRAM EXPOSURE MACHINE
MACHINE D'EXPOSITION HOLOGRAMME ET PROCÉDÉ D'AJUSTEMENT D'UNE MACHINE D'EXPOSITION HOLOGRAMME

(30) Priorität: 12.02.2020 DE 102020103618
(43) Veröffentlichungstag der Anmeldung: 18.08.2021
(73) Patentinhaber: Bundesdruckerei GmbH, 10969 Berlin (DE)
(72) Erfinder: Langgaßner, Michael, 81245 München (DE); Richter, Werner, 80999 München (DE)
(74) Vertreter: Hentrich Patent- & Rechtsanwaltspartnerschaft mbB

(56) Entgegenhaltungen:
- WO-A2-2007/125347
- DE-A1- 102012 215 540
- DE-A1- 102017 218 544

## Beschreibung

Die Erfindung betrifft eine Hologrammbelichtungsmaschine zum Einbringen eines Volumenreflexionshologramms in einen Filmabschnitt eines Hologrammfilms gemäß Anspruch 1. Die Hologrammbelichtungsmaschine umfasst, unter anderem, eine Lichtquelle zur Emission von Licht sowie eine Strahlführungsoptik zur Führung des von der Lichtquelle emittierten Lichts. Ferner ist ein räumlicher Lichtmodulator vorhanden, der ausgebildet ist, Licht von der Lichtquelle oder von einem Teil der Strahlführungsoptik oder von einer zweiten Lichtquelle zu empfangen und räumlich moduliertes Licht zurückzugeben. Zusätzlich ist ein Master für die Hologrammbelichtung mittels des vom Lichtmodulator zurückgegebenen Lichts in einem Belichtungsbereich vorhanden. Die Erfindung betrifft außerdem ein Verfahren zum Justieren einer solchen Hologrammbelichtungsmaschine gemäß Anspruch 6.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert, wie beispielsweise den Druckschriften DE 10 2012 215 540 A1, DE 10 2007 042 385 A1 und
DE 10 2007 042 386 A1 zu entnehmen ist. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden beim Kontaktkopierverfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt. Ein Verfahren zur Herstellung eines Masters und ein Kontaktkopierverfahren sind der EP 0 896 260 A2 zu entnehmen.

Typischerweise wird bei bekannten Hologrammbelichtungsmaschinen die Strahlführungsoptik eingestellt oder justiert hinsichtlich der Position des Lichtstrahls oder der Lichtstrahlen, hinsichtlich der Abmessungen des Lichtstrahls oder der Lichtstrahlen und hinsichtlich der Intensität des Lichtstrahls oder der Lichtstrahlen. Dabei werden die Position und die Abmessungen "nach Augenmaß" geprüft, wobei zur Prüfung der Leuchtintensität gesonderte sog. Powermessgeräte Einsatz finden.

In der WO 2007 / 125 347 A2 wird eine Belichtungseinrichtung zur Belichtung eines Hologrammfilms beschrieben, bei der der Belichtungs- und damit der Rekonstruktionswinkel verändert werden kann.

In der DE 10 2017 218 544 A1 wird eine Belichtungsvorrichtung zur Belichtung eines Hologrammfilms beschrieben, bei der zunächst eine Strahlteilung erfolgt, wobei die beiden Teilstrahlen anschließend aufeinandertreffen und dabei in einem Hologrammfilm interferieren.

Es ist daher die Aufgabe der vorliegenden Erfindung, eine verbesserte Hologrammbelichtungsmaschine und ein verbessertes Verfahren zum Justieren einer solchen bereitzustellen.

Diese Aufgabe wird mit einer Hologrammbelichtungsmaschine mit dem Merkmalsbestand des Anspruchs 1 sowie mit einem Verfahren des Anspruchs 6 gelöst. Vorteilhafte Ausgestaltungen mit zweckmäßigen Weiterbildungen der Erfindung sind in den abhängigen Ansprüchen angegeben.

Die Hologrammbelichtungsmaschine zeichnet sich dabei durch den Einsatz einer Kamera aus, die ausgebildet ist, den Belichtungsbereich optisch zu erfassen. Anhand des Bilds der Kamera lässt sich dann die Position des Lichtstrahls für die Hologrammbelichtung erfassen und gegebenenfalls neu ausrichten. Zugleich ist durch den Einsatz der Kamera eine Prozessüberwachung, insbesondere eine Live-Prozessüberwachung, ermöglicht, um schon frühzeitig entstandenen Ausschuss zu erkennen oder in vorteilhafter Weise sogar gänzlich zu vermeiden.

Es ist von Vorteil, wenn die optische Achse der Kamera mit der optischen Achse der Hologrammbelichtung zusammenfällt. Damit ist der Vorteil verbunden, dass die Abmessungen des auf dem Master auftreffenden Lichtstrahls von der Kamera unverfälscht erfasst werden können und eine nachträgliche rechnerische Korrektur aufgrund voneinander abweichender optischen Achsen entfällt. Eine solche Korrektur ist aber dennoch möglich.

Um die Hologrammbelichtungsmaschine besonders kompakt zu halten, ist erfindungsgemäß vorgesehen, dass die Strahlführungsoptik einen Einkoppelspiegel umfasst, der ausgebildet ist, das vom Lichtmodulator räumlich modulierte Licht in Richtung des Masters abzulenken.

Damit die optische Achse der Kamera wiederum mit der optischen Achse der Hologrammbelichtung zusammenfallen kann, ist erfindungsgemäß vorgesehen, dass der Einkoppelspiegel teildurchlässig ist, und die Kamera außerhalb des Strahlengangs des räumlich modulierten Lichts hinter dem Einkoppelspiegel angeordnet ist.

Erfindungsgemäß ist vorgesehen, dass die Kamera ausgebildet ist, eine Intensitätsverteilung von auf dem Master oder dem Filmabschnitt auftreffendem Licht zu erfassen. Diese Ausgestaltung ist von Vorteil, da der optischen Erfassung der Kamera nun eine Doppelfunktion zukommt, nämlich einerseits den Ersatz des "Augenmaßes" für die Positions- und Abmessungsbestimmung sowie andererseits den Ersatz des Powermessgeräts für die absolute Intensitätsbestimmung. Die Kamera erlaubt eine Messung der relativen Intensitätsverteilung, wobei relative Abweichungen bezüglich eines Istzustandes erfasst werden.

Zum Justieren und zur Überwachung des Belichtungsprozesses ist es sinnvoll, wenn eine Anzeigeeinrichtung vorhanden und ausgebildet ist, das von der Kamera erfasste Bild anzuzeigen.

Um die Hologrammbelichtungsmaschine wiederum sehr bauraumarm oder kompakt zu bildet, ist außerdem die Möglichkeit eröffnet, die Anzeigeeinrichtung auf einer ersten Seite eines Maschinengehäuses der Maschine anzuordnen, welche einen Zugang zur Strahlführungsoptik bereitstellt, wobei die Kamera in einem Bereich an oder nahe an einer zweiten Seite des Maschinengehäuses angeordnet ist, in welchem sich eine Halteeinrichtung für mindestens einen Master befindet und in welchem die Hologrammbelichtung erfolgt. Hierbei ist die Justage der Hologrammbelichtungsmaschine und insbesondere deren Strahlführungsoptik vereinfacht aufgrund der Kameraunterstützung.

Für eine zuverlässige Einstellung der Strahlführungsoptik der Hologrammbelichtungsmaschine hat es sich als sinnvoll erwiesen, dass der Master im Belichtungsbereich mindestens einen von der Kamera optisch erfassbaren Referenzpunkt aufweist, und dass die Strahlführungsoptik ausgestaltet ist, mindestens einen Lichtstrahl des Lichts anhand des Referenzpunktes, beispielsweise eines MPM, des Masters einzustellen.

Als Referenzpunkt ist dabei nicht lediglich ein ohne Abmessungen gebildeter Punkt zu verstehen, sondern der Referenzpunkt kann ein beliebiges zweidimensionales Gebilde sein, welches von der Kamera erfassbar ist. So kann der Referenzpunkt beispielsweise als eine Ellipse, als ein Rechteckt oder auch als eine bloße Linie gestaltet sein.

Die in Verbindung mit der erfindungsgemäßen Hologrammbelichtungsmaschine beschriebenen Vorteile und vorteilhaften Ausgestaltungen gelten in gleichem Maße auch für das erfindungsgemäße Verfahren zum Justieren einer solchen.

Es umfasst insbesondere die Schritte:
- Einbringen eines mit mindestens einem Referenzpunkt versehenen Masters in einen Belichtungsbereich, in welchem die Hologrammbelichtung erfolgt,
- optisches Erfassen des Belichtungsbereichs mittels einer Kamera und Anzeigen des von der Kamera erfassten Bilds an einer Anzeigeeinrichtung,
- Einkoppeln mindestens eines Lichtstrahls von Licht einer Lichtquelle in den Belichtungsbereich mittels einer Strahlführungsoptik, und
- Prüfen anhand des von der Kamera erfassten Bilds, ob der Lichtstrahl auf den Referenzpunkt am Master auftrifft und die gewünschte Intensitätsverteilung aufweist.

Damit ist eine effiziente, zeit- und kostensparende Justage der Hologrammbelichtungsmaschine geschaffen, da aufgrund der grafischen Darstellung bei der Einstellung der Strahlführungsoptik nicht mehr auf das menschliche "Augenmaß" oder ein gesondertes Powermessgerät zurückgegriffen werden muss. Die optische Überwachung der Einstellung oder der Justage erfolgt demgegenüber mit Hilfe lediglich der Kamera. Dabei ist die Möglichkeit vorhanden, dass an dem Master mehrere der Referenzpunkt oder mehrere der Referenzgeometrien vorhanden sind, anhand welcher die Strahlausrichtung und/oder Intensität geprüft wird.

Für die zuverlässige Hologrammbelichtung ist ferner von Vorteil, wenn die Strahlführungsoptik hinsichtlich ihrer Einstellung unter optischer Überwachung mit der Kamera solange verändert wird bis der Lichtstrahl auf den Referenzpunkt am Master auftrifft und/oder die gewünschte Intensitätsverteilung aufweist und/oder die gewünschten Abmessungen besitzt.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische Darstellung einer Hologrammbelichtungsmaschine zur Belichtung eines Volumenreflexionshologramms in einen Hologrammfilm,
- Figur 2: den Schnitt A-A aus Figur 1,
- Figur 3: eine Illustration einer Draufsicht auf einen sich am Master befindenden Filmabschnitt eines Hologrammfilms, über den zwei Scanlinien zur zeitgleichen Belichtung von zwei unterschiedlichen Volumenreflexionshologrammen streichen und der einen Referenzpunkt (MPM) umfasst.

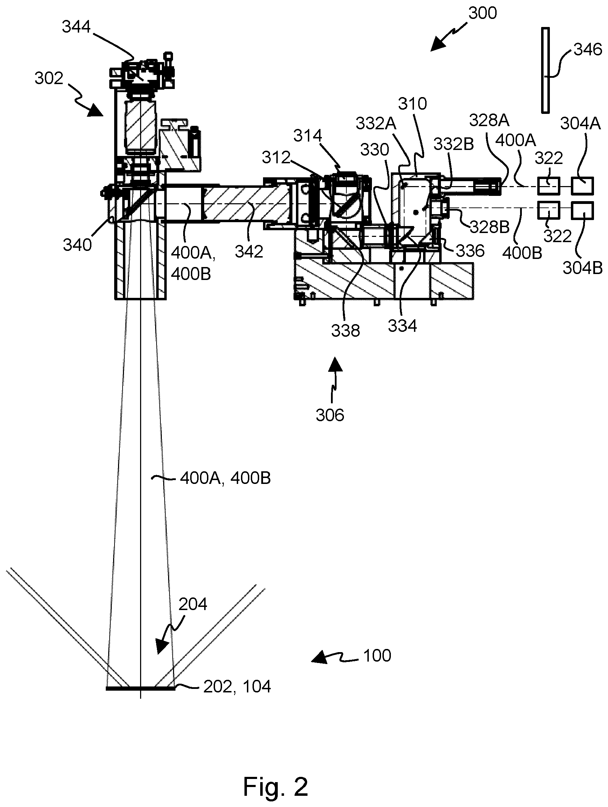

In Figur 2 ist eine Hologrammbelichtungsmaschine 300 zum Belichten von Hologrammen in einem Hologrammfilm 200 gezeigt. Eine solche Hologrammbelichtungsmaschine 300 wird auch als Holobelichter bezeichnet.

Die Hologrammbelichtungsmaschine 300 umfasst eine in der Zeichnung oben dargestellte Belichtungseinrichtung 302 und einen in der Zeichnung unten dargestellten Belichtungstisch 100.

Die Belichtung von Hologrammen erfolgt im Belichtungsbereich 204 mittels kohärentem Licht. Hierfür weist die Belichtungeinrichtung 302 eine erste Lichtquelle 304A und eine zweite Lichtquelle 304B auf, welche vorliegend als ein cw-Laser ausgebildet sind und unterschiedliche Wellenlängen emittieren. Vorliegend steht "cw" für "continuous wave" und bedeutet "zeitlich konstant abgestrahlte Welle". Es ist die Möglichkeit gegeben, dass es sich bei den Lichtquellen 304A, 304B um einen gepulsten Laser handelt. Es können auch mehr als zwei der Lichtquellen 304A, 304B vorhanden sein, die jeweils eine unterschiedliche Wellenlänge des Lichts emittieren. Das Licht 400A, 400B der als Laser ausgebildeten Lichtquellen 304A, 304B weist einen ersten Polarisationszustand auf. Zum Führen des Lichts 400A, 400B wird eine Strahlführungsoptik 306 verwendet. Das Licht der Lichtquellen 304A, 304B wird bei der dargestellten Belichtungseinrichtung 302 zunächst, ggfs. unter Zuhilfenahme einer Strahlformungseinrichtung 322 zur insbesondere in einer Raumrichtung orientierten Strahlaufweitung, auf eine Ablenk- und Scanvorrichtung 310 der Strahlführungsoptik 306 geführt.

Die Ablenk- und Scanvorrichtung 310 umfasst eine erste Eintrittsöffnung 328A für das Licht 400A der ersten Lichtquelle 304A und eine zweite Eintrittsöffnung 328B für das Licht 400B der zweiten Lichtquelle 304B. Im Gehäuse der Ablenk- und Scanvorrichtung 310 ist ein erster Scannerspiegel 332A für die Ablenkung des über die erste Eintrittsöffnung 328A einfallenden Lichts 400A und ein zweiter Scannerspiegel 332B für die Ablenkung des über die zweite Eintrittsöffnung 328B einfallenden Lichts 400B vorhanden.

Die versetzt zueinander angeordneten Scannerspiegel 332A, 332B sind jeweils mit einem Galvanometerscanner gekoppelt, so dass die Scannerspiegel 332A, 332B verschiebbar oder verschwenkbar sind. Durch das Verschieben oder das Verschwenken der Scannerspiegel 332A, 332B kann eine einem "Scan", insbesondere einem Linienscan entsprechende Belichtung des Hologramms erfolgen. **In** anderen Worten wird der Hologrammfilm 200 zur Belichtung des Hologramms "abgetastet".

Die Ablenk- und Scanvorrichtung 310 ist vorliegend ausgebildet, das abgelenkte Licht 400A, 400B der ersten Lichtquelle 304A und der zweiten Lichtquelle 304B über eine gemeinsame Austrittsöffnung 330 auszugeben. Hierzu ist ein Spiegel 336 vorhanden, der ausgebildet ist, das von dem zweiten Scannerspiegel 332B abgelenkte Licht 400B in Richtung eines teiltransparenten Spiegels 334 zu reflektieren, der ausgebildet ist, das vom dem ersten Scannerspiegel 332A abgelenkte Licht 400A in Richtung der Austrittsöffnung 330 zu reflektieren und das von dem Spiegel 336 einfallende Licht 400B in die Richtung der Austrittsöffnung 330 hindurchzulassen.

Ausgehend von der Austrittsöffnung 330 der Ablenk- und Scanvorrichtung 310 gelangt das Licht 400A, 400B dann auf einen Ablenkspiegel 338, der ausgebildet ist, das aus der Austrittsöffnung 330 der Ablenk- und Scanvorrichtung 310 austretende Licht 400A, 400B auf einen polarisationsabhängigen Strahlteiler 312 abzulenken.

Das vom Ablenkspiegel 338 abgelenkte Licht 400A, 400B wird vorliegend auf einen polarisationsabhängigen Strahlteilerwürfel der Strahlführungsoptik 306 geführt. Dieser ist aus einem ersten Prisma und einem zweiten Prisma gebildet, an deren Grenzfläche eine polarisationsabhängige Strahlteilung erfolgt. Anstelle von Prismen kann auch eine Strahlteilerplatte Einsatz finden. Licht 400A, 400B des ersten Polarisationszustands wird durch diese Grenzfläche hindurchgelassen. Licht 400A, 400B eines weiteren, zu dem ersten Polarisationszustand orthogonalen Polarisationszustands wird hingegen an der Grenzfläche abgelenkt.

Das an der Grenzfläche des polarisationsabhängigen Strahlteilerwürfels 312 hindurchgelassene Licht 400A, 400B trifft auf einen räumlichen Lichtmodulator 314, der als ein sogenannter Liquid-Crystal-on-Silicon-Lichtmodulator (LCoS) ausgebildet ist. Der Lichtmodulator 314 umfasst eine Siliziumschicht, an der auftreffendes Licht 400A, 400B reflektiert wird. Auf dieser Siliziumschicht sind vorliegend elektronische Schaltelemente ausgebildet, die zum Schalten von Flüssigkristallzellen verwendet werden, die vor der zur Reflexion genutzten Oberfläche der Siliziumschicht angeordnet sind. Die einzelnen Flüssigkristallzellen können individuell in unterschiedliche Schaltzustände versetzt werden. Typischerweise liegt ein Array an Flüssigkristallzellen vor, so dass aus der Papierebene heraus oder in diese hinein versetzt weitere Reihen an Flüssigkristallzellen vorliegen. Abhängig von dem jeweiligen Schaltzustand der Flüssigkristallzellen wird ein Polarisationszustand des durchtretenden Lichts 400A, 400B geändert oder nicht geändert, wodurch das Licht 400A, 400B räumlich moduliert wird. Vereinfachend wird hier angenommen, dass in einem ersten Schaltzustand das in einem ersten Polarisationszustand auf den Lichtmodulator 314 auftreffende Licht 400A, 400B beim Durchtritt durch eine Flüssigkristallzelle, welche aufgrund der Reflexion an der Oberfläche der Siliziumschicht zweimal durchlaufen wird, insgesamt hinsichtlich der Polarisation so verändert wird, dass das Licht 400A, 400B anschließend in dem zu dem ersten Polarisationszustand orthogonalen weiteren Polarisationszustand polarisiert ist. Dieses hinsichtlich der Polarisation modulierte Licht 400A, 400B tritt durch eine transparente Schutzscheibe des räumlichen Lichtmodulators 314, wobei insbesondere eine Austrittsfläche der Schutzscheibe parallel zu der Reflexionsoberfläche der Siliziumschicht orientiert ist. Die Oberflächennormale des Lichtmodulators 314 ist somit orthogonal sowohl zu der Austrittsfläche der Schutzscheibe als auch zu der reflektierenden Oberfläche der Siliziumschicht.

Das modulierte Licht 400A, 400B trifft nach dem Austreten aus dem Lichtmodulator 314 erneut auf dem polarisationsabhängigen Strahlteiler 312 auf, wobei das vom LCoS zurückreflektierte modulierte Licht 400A, 400B abhängig von seinem Polarisationszustand die Grenzfläche des Strahlteilers 312 passieren kann oder nicht. Ist das modulierte Licht 400A, 400B, wie im exemplarisch dargestellten Fall, aufgrund des ersten Schaltzustands der Flüssigkristallzelle in den zu dem ersten Polarisationszustand orthogonalen weiteren Polarisationszustand überführt worden, so kann dieses die Grenzfläche des polarisationsabhängigen Strahlteilerwürfels 312 nicht passieren und wird abgelenkt, womit es, ggfs. unter Zuhilfenahme eines Polarisationsfilters, weiter zur Belichtung in Richtung des Belichtungstisches 100 geleitet wird. Anteile des Lichts 400A, 400B, die sich nach wie vor in dem ersten Polarisationszustand befinden und an dem polarisationsabhängigen Strahlteilerwürfel 312 ankommen, werden an dessen Grenzfläche nicht abgelenkt und gelangen daher nicht weiter in Richtung des sich unter der Belichtungseinrichtung 302 befindlichen Belichtungstisches 100. Durch den polarisationsabhängigen Strahlteilerwürfel 312 wird somit das Licht 400A, 400B abhängig von dem aufmodulierten Polarisationszustand räumlich hinsichtlich der Intensität moduliert.

Die Belichtung des Hologrammfilms 200 am Master 104 wird durch einen Einkoppelspiegel 340 realisiert. Der Einkoppelspiegel 340 ist also mit anderen Worten ausgebildet, das vom Lichtmodulator 314 räumlich modulierte Licht 400A, 400B in Richtung des Masters 104 abzulenken. Im Strahlengang zwischen dem Einkoppelspiegel 340 und dem Strahlteiler 312 ist außerdem noch ein Objektiv 342 (Abbildungsoptik) eingebunden.

Bei der Beschreibung der Belichtungseinrichtung 302 wurde bis hierher davon ausgegangen, dass der räumliche Lichtmodulator 314 den Polarisationszustand des Lichts 400A, 400B um 90 Grad dreht oder unverändert lässt. Es sind jedoch auch Änderungen möglich, die eine Drehung der Polarisationsrichtung zwischen 0 Grad und 90 Grad bewirken. Alle diese Drehungen führen dazu, dass das Licht 400A, 400B eine veränderte Amplitude und damit veränderte Intensität des weiteren Polarisationszustands aufweist. Je nach Drehwinkel variieren diese und nehmen mit dem Betrag der Drehung zwischen 0 Grad und 90 Grad zu. Hierdurch ist es möglich "Graustufen" zu belichten.

Erfindungsgemäß weist die Hologrammbelichtungsmaschine 300 außerdem eine Kamera 344 auf, die ausgebildet ist, den Belichtungsbereich 204 optisch zu erfassen. Vorliegend ist der Einkoppelspiegel 340 teildurchlässig und lässt das vom Belichtungsbereich 204 emittierte Licht hindurch, wobei die außerhalb des Strahlengangs des räumlich modulierten Lichts 400A, 400B, mithin hinter dem Einkoppelspiegel 340 angeordnete Kamera 344 das vom Belichtungsbereich 204 emittierte Licht erfassen kann. Um die Anzahl an optischen Fehlabbildungen zu minimieren, fällt vorliegend die optische Achse der Kamera 344 mit der optischen Achse der Hologrammbelichtung zusammen. Die Kamera 344 kann dabei die Position und die Abmessungen von auf dem Master 104 oder dem Filmabschnitt 202 auftreffenden Lichtstahlen oder Lichtgeometrien erfassen. Außerdem ist die Kamera 344 ausgebildet, eine Intensität der Lichtstrahlen und damit eine Intensitätsverteilung von auf dem Master 102 oder dem Filmabschnitt 202 auftreffendem Licht 400A, 400B zu erfassen. Dadurch kann der Belichtungsprozess optisch überwacht werden. Die Kamera 344 kann auch für Überwachung der Justage der Strahlführungsoptik 306 verwendet werden. In beiden Fällen ist die vorteilhafte Möglichkeit gegeben, dass eine Anzeigeeinrichtung 346 vorhanden und ausgebildet ist, das von der Kamera 344 erfasste Bild anzuzeigen.

Bei der gezeigten Hologrammbelichtungsmaschine 300 ist die Anzeigeeinrichtung 346 auf einer ersten Seite eines (nicht dargestellten) Maschinengehäuses angeordnet ist, welche einen (nicht dargestellten) Zugang zur Strahlführungsoptik 306 bereitstellt, wobei die Kamera 344 in einem Bereich an oder nahe an einer zweiten Seite des Maschinengehäuses angeordnet ist, in welchem sich eine Halteeinrichtung 102 für mindestens einen Master 104 befindet und in welchem die Hologrammbelichtung erfolgt. Der Einsatz der Kamera 344 bietet also den Vorteil, dass eine vereinfachte Justage ermöglicht ist, da die Auswirkung einer Veränderung eines oder mehrerer Parameter der Strahlführungsoptik 306 direkt an der Anzeigeeinrichtung 346 erkennbar ist, ohne dass der Benutzer um die Maschine herumgehen muss, um das Resultat der Parameterveränderung nach "Augenmaß" oder mittels eines Powermessgeräts zu prüfen.

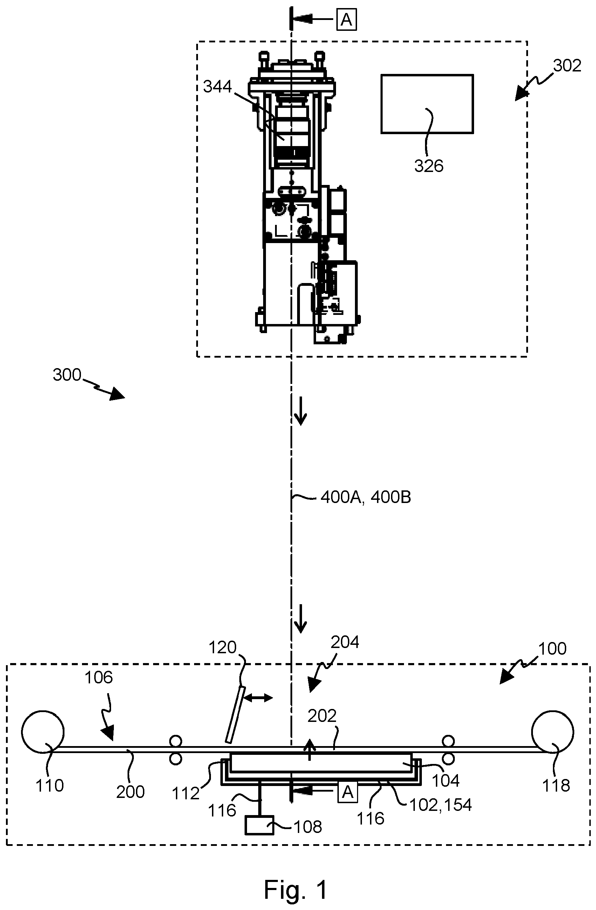

Ausweislich Figur 1 weist der Belichtungstisch 100 die Halteeinrichtung 102 auf, in welcher der Master 104 aufgenommen ist. Der Master 104 umfasst einen Träger, welcher in der Regel aus Glas oder einem anderen Werkstoff gebildet ist. Auch andere Trägermaterialien sind möglich, beispielsweise Metalle. Auf den Träger ist vorzugsweise mindestens eine optisch aktive Schicht, beispielsweise eine Beugungsschicht, aufgebracht, welche eine zu kopierende Beugungsstruktur umfasst. Vorliegend umfasst die Beugungsschicht des Masters 104 ein Volumenreflexionshologramm, welches kopiert werden soll.

Es ist zu erkennen, dass die Belichtungsmaschine 300, insbesondere der Belichtungstisch 100 eine Filmtransporteinrichtung 106 umfasst, die ausgebildet ist, den Hologrammfilm 200 relativ bezüglich der Halteeinrichtung 102 und damit relativ zum Master 104 zu transportieren. Die Filmtransporteinrichtung 106 ist für ein Aufnehmen des holografischen Films und Halten und/oder Führen des Films während der Belichtung des Hologramms vorgesehen. Bei der dargestellten Belichtungsmaschine 300 umfasst die Filmtransporteinrichtung 106 eine Filmrolle 110, auf der der Hologrammfilm 200 bereitgestellt wird. Dieser wird nach dem Belichten auf einer weiteren Filmrolle 118 aufgewickelt. Gegebenenfalls durchläuft der belichtete Hologrammfilm 200 eine Strecke zur Entwicklung des Hologramms, durch welche thermisch auf den Hologrammfilm 200 eingewirkt wird, um das Hologramm im Film zu fixieren, bevor der belichtete Hologrammfilm 200 auf der weiteren Filmrolle 118 wieder aufgewickelt wird. Der Hologrammfilm 200 wird jedenfalls in typischer Weise mittels Filmführungsrollen geführt. Es ist zu erkennen, dass sich der Hologrammfilm 200 über den Bereich des Masters 104 hinweg erstreckt, womit die Filmtransporteinrichtung 106 in anderen Worten also ausgebildet ist, einen zu belichtenden Filmabschnitt 202 relativ bezüglich des Masters 104 zu positionieren. In diesen Filmabschnitt 202 wird das Volumenreflexionshologramm belichtet, mithin einkopiert. Um eine betriebssichere Belichtung des Hologramms zu erzielen, liegt der Hologrammfilm 200 während des Belichtungsvorgangs an dem Master 104 an. Durch diese Anlage lassen sich Eigenbewegungen des holografischen Films unterdrücken, was die erzielbare Beugungseffizienz des hergestellten Hologramms steigert.

Bei der Belichtung tritt das modulierte Licht 400A, 400B, welches den weiteren Polarisationszustand aufweist, durch den zu belichtenden Filmabschnitt 202 des Hologrammfilms 200 hindurch und wird an der optisch aktiven Struktur der mindestens einen optisch aktiven Schicht des Masters 104 zurückgelenkt, z.B. bei einer als Beugungsschicht ausgebildeten optisch aktiven Schicht gebeugt. Das zurückgestrahlte Licht (nicht dargestellt) interferiert dann in dem Hologrammfilm 200 mit dem von dem Lichtmodulator 314 kommenden modulierten Licht 400A, 400B. Hierdurch wird die optisch aktive Struktur, z.B. die beugende Struktur, des Masters 104 in den Hologrammfilm 200 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Volumenreflexionshologramms einer Mattscheibe.

Der Halteeinrichtung 102 ist vorliegend eine Drucklufteinrichtung 108 zugeordnet, die ausgebildet ist, für die Belichtung des Filmabschnitts 202 diesen mittels eines Unterdrucks an dem in der Halteeinrichtung 102 aufgenommenen Master 104 zumindest zeitweise zu fixieren. Hierzu ist vorliegend ein um den Master 104 umfangsseitig angeordneter Schlitz vorhanden, der somit eine Gasdurchtrittsanordnung 112 bildet. Die Gasdurchtrittsanordnung 112 rahmt also den Master 104 umfangsseitig und gewährleistet damit ein blasenfreies Anliegen des zu belichtenden Filmabschnitts 202 am Master 104. Vorliegend kann die Drucklufteinrichtung 108 aber zusätzlich dazu genutzt werden, um zeitweise einen Überdruck derart bereitzustellen, dass der Transport des Hologrammfilms 200 relativ bezüglich des Masters 104 von einem Luftpolster gestützt erfolgt, was Beschädigungen des Hologrammfilms 200 zusätzlich vorbeugt.

Um Gaseinschlüsse zwischen dem Hologrammfilm 200 und dem Master 104 zusätzlich herausdrücken zu können, ist vorliegend außerdem eine Aufstreifeinrichtung 120 vorhanden um den zu belichtenden Filmabschnitt 202 auf den Master 104 aufzustreifen. Diese Aufstreifeinrichtung 120 ist vorliegend durch einen zwischen zwei Anschlägen verschiebbaren Schlitten gebildet, an dem eine auf einer Drehachse drehbar gelagerte und beim Aufstreifen mit dem Filmabschnitt 202 wechselwirkende Anpressrolle gelagert ist.

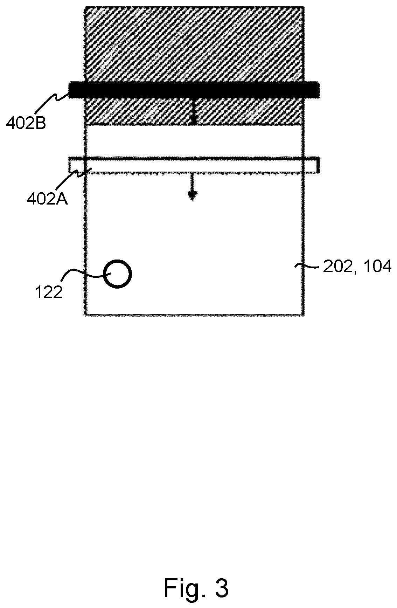

Mit der Hologrammbelichtungsmaschine 300 ist es möglich, dass zwei unterschiedliche Hologramme zeitgleich in den Filmabschnitt 202 des Hologrammfilms 200 belichtet werden, wie sich anhand der Illustration nach Figur 3 erkennen lässt. Diese zeigt eine erste Scanlinie 402A aus räumlich moduliertem Licht 400A der ersten Lichtquelle 304A. Außerdem ist eine zweite Scanlinie 402B aus räumlich moduliertem Licht 400B der zweiten Lichtquelle 304B gezeigt. Beide Scanlinien 402A, 402B überstreichen sukzessive und größtenteils zeitgleich den Hologrammfilm 200 am Master 104 in einem Zeitmultiplexverfahren. Das Verfahren zum Einbringen mehrerer Volumenreflexionshologramme in den Filmabschnitt 202 des Hologrammfilms 200, umfasst dabei insbesondere die Schritte:
- Einbringen des Filmabschnitts 202 in den Belichtungsbereich 204 an oder neben dem Master 104,
- Entsenden von Licht 400A der ersten Lichtquelle 304A an die erste Eintrittsöffnung 328A der Ablenk- und Scanvorrichtung 310,
- Ablenken des über die erste Eintrittsöffnung 328A einfallenden Lichts 400A an den Spiegeln der Ablenk- und Scanvorrichtung 310, wodurch das Licht 400A über die Austrittsöffnung 330 der Ablenk- und Scanvorrichtung 310 austritt,
- räumliche Modulation des von der ersten Lichtquelle 304A emittierten Lichts 400A mittels des räumlichen Lichtmodulators 314 an einem ersten Modulationsbereich, der das "Bild" des ersten Hologramms vorgibt, und anschließende Belichtung des Filmabschnitts 202 mit dem vom Lichtmodulator 314 räumlich modulierten Licht 400A,
- wobei zeitgleich Licht 400B von der zweiten Lichtquelle 400 emittiert und an die zweite Eintrittsöffnung 328B der Ablenk- und Scanvorrichtung 310 geführt wird, sowie
- Ablenken des über die zweite Eintrittsöffnung 328B einfallenden Lichts 400B an mehreren Spiegeln der Ablenk- und Scanvorrichtung 310, wodurch das Licht 400B über die Austrittsöffnung 330 der Ablenk- und Scanvorrichtung 310 austritt, und
- räumliche Modulation des von der zweiten Lichtquelle 304B emittierten Lichts 400B mittels des räumlichen Lichtmodulators 314 an einem zweiten Modulationsbereich, der das "Bild" des zweiten Hologramms vorgibt, und anschließende Belichtung des Filmabschnitts 202 mit dem vom Lichtmodulator 314 räumlich modulierten Licht 400B.

Figur 3 zeigt ferner einen Referenzpunkt 122 am Master 104, der dem Justieren der Strahlführungsoptik 306 und damit der Lichtstrahlen und/oder der Lichtgeometrien dient. Das Verfahren zum Justieren der Hologrammbelichtungsmaschine 300 umfasst dabei insbesondere die folgenden Schritte:
- Einbringen des mit dem mindestens einem Referenzpunkt 122 versehenen Masters 104 in den Belichtungsbereich 204, in welchem die Hologrammbelichtung erfolgt,
- optisches Erfassen des Belichtungsbereichs 204 mittels der Kamera 344 und Anzeigen des von der Kamera 344 erfassten Bilds an einer Anzeigeeinrichtung 346,
- Einkoppeln mindestens eines Lichtstrahls von Licht 400A, 400B der Lichtquellen 304A, 304B in den Belichtungsbereich 204 mittels der Strahlführungsoptik 306, und
- Prüfen anhand des von der Kamera 344 erfassten Bilds, ob der Lichtstrahl auf den Referenzpunkt 122 am Master 104 auftrifft und/oder die gewünschte Intensitätsverteilung aufweist und/oder die gewünschten Abmessungen besitzt,
- wobei im Falle einer detektierten Abweichung mindestens ein Parameter der Strahlführungsoptik 306 derart unter optischer Überwachung mit der Kamera 344 solange verändert wird, bis der Lichtstrahl auf den Referenzpunkt 122 am Master 104 auftrifft und/oder die gewünschte Intensitätsverteilung aufweist und/oder die gewünschten Abmessungen besitzt.

Für die Steuerung der einzelnen Konstituenten der Belichtungsmaschine 300 ist außerdem eine Steuerungseinrichtung 326 vorhanden (Fig. 1). Die Steuerungseinrichtung 326 ist dabei in vorteilhafter Weise ausgebildet, die Kamera 344 und Anzeigeeinrichtung 346, die Lichtquellen 304A, 304B und/oder die Scannerspiegel 332A, 332B der Ablenk- und Scaneinrichtung 310 und/oder den Lichtmodulator 314 und/oder die Filmtransporteinrichtung 106 und/oder die Drucklufteinrichtung 108 und/oder die Aufstreifeinrichtung 120 zu steuern. In anderen Worten ist also die Steuerungseinrichtung 326 dazu ausgelegt, das erfindungsgemäße Verfahren mit der erfindungsgemäßen Hologrammbelichtungsmaschine 300 durchzuführen.

### BEZUGSZEICHENLISTE

- 100: Belichtungstisch
- 102: Halteeinrichtung
- 104: Master
- 106: Filmtransporteinrichtung
- 108: Drucklufteinrichtung (Saugeinrichtung und/oder Blaseinrichtung)
- 110: Filmrolle (unbelichteter Holofilm)
- 112: Gasdurchtrittsanordnung
- 116: Kanal (Druckluft/Saugluft)
- 118: weitere Filmrolle (belichteter Holofilm)
- 120: Aufstreifeinrichtung
- 200: Hologrammfilm
- 202: Filmabschnitt (zu belichtender Filmabschnitt)
- 204: Belichtungsbereich
- 300: Hologrammbelichtungsmaschine
- 302: Belichtungseinrichtung
- 304A: erste Lichtquelle (z.B. Laser)
- 304B: zweite Lichtquelle (z.B. Laser)
- 306: Strahlführungsoptik
- 310: Ablenk- und Scaneinrichtung
- 312: Strahlteiler
- 314: Lichtmodulator
- 322: Strahlformungseinrichtung (z.B. Powell- oder Zylinderlinse)
- 326: Steuerungseinrichtung
- 328A: erste Eintrittsöffnung
- 328B: zweite Eintrittsöffnung
- 330: Austrittsöffnung
- 332A: erste Scannerspiegel
- 332B: zweiter Scannerspiegel
- 334: teiltransparenter Spiegel
- 336: Spiegel
- 338: Ablenkspiegel
- 340: Einkoppelspiegel
- 342: Objektiv
- 344: Kamera
- 346: Anzeigeeinrichtung (Display)
- 400A: Licht (erste Lichtquelle)
- 400B: Licht (zweite Lichtquelle)
- 402A: erste Scanlinie
- 402B: zweite Scanlinie

## Patentansprüche

1. Hologrammbelichtungsmaschine (300) zum Einbringen eines Volumenreflexionshologramms in einen Filmabschnitt (202) eines Hologrammfilms (200),
mit einer Lichtquelle (304A, 304B) zur Emission von Licht (400A, 400B), mit einer Strahlführungsoptik (306) zur Führung des von der Lichtquelle (304A, 304B) emittierten Lichts (400A, 400B),
mit einem räumlichen Lichtmodulator (314) in Form eines Liquid-Crystal-on-Silicon-Lichtmodulators, der ausgebildet ist, Licht (400A, 400B) von der Lichtquelle (304A, 304B) oder von einem Teil der Strahlführungsoptik (306) zu empfangen und räumlich moduliertes Licht (400A, 400B) durch Reflektieren an einer Siliziumschicht zurückzugeben,
sowie mit einem Master (104) für die Hologrammbelichtung mittels des vom Lichtmodulator (314) zurückgegebenen Lichts (400A, 400B) in einem Belichtungsbereich (204),
**gekennzeichnet durch**
eine Kamera (344), die ausgebildet ist, den Belichtungsbereich (204) optisch zu erfassen,
wobei die Strahlführungsoptik (306) einen Einkoppelspiegel (340) umfasst, der ausgebildet ist, das vom Lichtmodulator (314) räumlich modulierte Licht (400A, 400B) in Richtung des Masters (104) abzulenken,
wobei der Einkoppelspiegel (340) teildurchlässig ist, und
wobei die Kamera (344) außerhalb des Strahlengangs des räumlich modulierten Lichts (400A, 400B) hinter dem Einkoppelspiegel (340) angeordnet und ausgebildet ist, eine Intensitätsverteilung von auf dem Master (104) oder dem Filmabschnitt (202) auftreffendem Licht (400A, 400B) zu erfassen.

2. Hologrammbelichtungsmaschine (300) nach Anspruch 1, **dadurch gekennzeichnet, dass** die optische Achse der Kamera (344) mit der optischen Achse der Hologrammbelichtung zusammenfällt.

3. Hologrammbelichtungsmaschine (300) nach einem Anspruch 1 oder 2,
**dadurch gekennzeichnet, dass** eine Anzeigeeinrichtung (346) vorhanden und ausgebildet ist, das von der Kamera (344) erfasste Bild anzuzeigen.

4. Hologrammbelichtungsmaschine (300) nach Anspruch 3, **dadurch gekennzeichnet, dass** die Anzeigeeinrichtung (346) auf einer ersten Seite eines Maschinengehäuses angeordnet ist, welche einen Zugang zur Strahlführungsoptik (306) bereitstellt, und dass die Kamera (344) in einem Bereich an oder nahe an einer zweiten Seite des Maschinengehäuses angeordnet ist, in welchem sich eine Halteeinrichtung (102) für mindestens einen Master (104) befindet und in welchem die Hologrammbelichtung erfolgt.

5. Hologrammbelichtungsmaschine (300) nach einem der Ansprüche 1 bis 4, **dadurch gekennzeichnet, dass** der Master (104) im Belichtungsbereich (204) mindestens einen von der Kamera (344) optisch erfassbaren Referenzpunkt (122) aufweist, und dass die Strahlführungsoptik (306) ausgestaltet ist, mindestens einen Lichtstrahl des Lichts (400A, 400B) anhand des Referenzpunktes (122) des Masters (104) einzustellen.

6. Verfahren zum Justieren einer Hologrammbelichtungsmaschine (300) nach einem der Ansprüche 1 bis 5, umfassend die Schritte:
- Einbringen eines mit mindestens einem Referenzpunkt (122) versehenen Masters (104) in einen Belichtungsbereich (204), in welchem die Hologrammbelichtung erfolgt,
- optisches Erfassen des Belichtungsbereichs (204) mittels einer Kamera (344) und Anzeigen des von der Kamera (344) erfassten Bilds an einer Anzeigeeinrichtung (346),
- Einkoppeln mindestens eines Lichtstrahls von Licht (400A, 400B) einer Lichtquelle (304A, 304B) in den Belichtungsbereich (204) mittels einer Strahlführungsoptik (306), und
- Prüfen anhand des von der Kamera (344) erfassten Bilds, ob der Lichtstrahl auf den Referenzpunkt (122) am Master (104) auftrifft und die gewünschte Intensitätsverteilung aufweist.

7. Verfahren nach Anspruch 6, **dadurch gekennzeichnet, dass** die Strahlführungsoptik (306) hinsichtlich ihrer Einstellung unter optischer Überwachung mit der Kamera (344) solange verändert wird bis der Lichtstrahl auf den Referenzpunkt (122) am Master (104) auftrifft und die gewünschte Intensitätsverteilung aufweist.

## Claims

1. A hologram exposure machine (300) for forming a volume reflection hologram into a film section (202) of a hologram film (200),
with a light source (304A, 304B) for emitting light (400A, 400B),
with beam-guiding optics (306) for guiding the light (400A, 400B) emitted by the light source (304A, 304B),
with a spatial light modulator (314) in the form of a liquid-crystal-on-silicon light modulator, which is configured to receive light (400A, 400B) from the light source (304A, 304B) or from a part of the beam-guiding optics (306) and to return spatially modulated light (400A, 400B) by reflection off a silicon layer,
and with a master (104) for hologram exposure using the light (400A, 400B) returned by the light modulator (314) in an exposure area (204),
**characterized by**
a camera (344) configured to optically detect the exposure area (204), wherein the beam-guiding optics (306) comprise a incident mirror (340) configured to deflect the spatially modulated light (400A, 400B) from the light modulator (314) toward the master (104),
wherein the incident mirror (340) is partially transparent, and
wherein the camera (344) is arranged outside the beam path of the spatially modulated light (400A, 400B) behind the incident mirror (340) and is configured to detect an intensity distribution of light (400A, 400B).

2. The hologram exposure machine (300) according to claim 1, **characterized in that** the optical axis of the camera (344) coincides with the optical axis of the hologram exposure.

3. The hologram exposure machine (300) according to claim 1 or 2, **characterized in that** a display device (346) is provided and configured to display the image captured by the camera (344).

4. The hologram exposure machine (300) according to claim 3, **characterized in that** the display device (346) is arranged on a first side of a machine housing that provides access to the beam-guiding optics (306), and that the camera (344) is arranged in a region at or near a second side of the machine housing, in which a holding device (102) for at least one master (104) is located and in which the hologram exposure takes place.

5. The hologram exposure machine (300) according to any one of claims 1 to 4, **characterized in that** the master (104) has, in the exposure area (204), at least one reference point (122) that can be optically detected by the camera (344), and that the beam-guiding optics (306) are configured to adjust at least one light beam of the light (400A, 400B) based on the reference point (122) of the master (104).

6. A method for the adjustment of a hologram exposure machine (300) according to any one of claims 1 to 5, comprising the steps of:
- inserting a master (104) provided with at least one reference point (122) into an exposure area (204) in which a hologram exposure takes place,
- optically capturing the exposure area (204) using a camera (344) and displaying the image captured by the camera (344) on a display device (346),
- emitting at least one light beam (400A, 400B) from a light source (304A, 304B) into the exposure area (204) using beam-guiding optics (306), and
- checking, based on the image captured by the camera (344), whether the light beam strikes the reference point (122) on the master (104) and has the desired intensity distribution.

7. The method according to claim 6, **characterized in that** the beam-guiding optics (306) are adjusted under optical monitoring with the camera (344) until the light beam strikes the reference point (122) on the master (104) and exhibits the desired intensity distribution.

## Revendications

1. Machine d'exposition d'hologramme (300) pour l'introduction d'un hologramme par réflexion en volume dans une section de film (202) d'un film d'hologramme (200),
avec une source de lumière (304A, 304B) pour l'émission de lumière (400A, 400B),
avec une optique de guidage de faisceau (306) pour le guidage de la lumière (400A, 400B) émise par la source de lumière (304A, 304B),
avec un modulateur de lumière (314) spatial sous la forme d'un modulateur de lumière à cristaux liquides sur silicone qui est formé afin de recevoir la lumière (400A, 400B) de la source de lumière (304A, 304B) ou d'une partie de l'optique de guidage de faisceau (306) et de rendre la lumière (400A, 400B) modulée dans l'espace au niveau d'une couche de silicium,
ainsi qu'avec un maître (104) pour l'exposition d'hologramme au moyen de la lumière (400A, 400B) rendue par le modulateur de lumière (314) dans une zone d'exposition (204),
**caractérisée par**
une caméra (344) qui est formée afin de détecter optiquement la zone d'exposition (204),
dans lequel l'optique de guidage de faisceau (306) comprend un miroir d'injection (340) qui est formé afin de dévier la lumière (400A, 400B) modulée dans l'espace par le modulateur de lumière (314) en direction du maître (104),
dans lequel le miroir d'injection (340) est partiellement transparent et
dans lequel la caméra (344) est agencée en dehors de la trajectoire de faisceau de la lumière (400A, 400B) modulée dans l'espace derrière le miroir d'injection (340) et formée afin de détecter une répartition d'intensité de la lumière (400A, 400B) incidente sur le maître (104) ou la section de film (202).

2. Machine d'exposition d'hologramme (300) selon la revendication 1, **caractérisée en ce que** l'axe optique de la caméra (344) coïncide avec l'axe optique de l'exposition d'hologramme.

3. Machine d'exposition d'hologramme (300) selon la revendication 1 ou 2, **caractérisée en ce qu'**un dispositif d'affichage (346) est présent et formé afin d'afficher l'image détectée par la caméra (344).

4. Machine d'exposition d'hologramme (300) selon la revendication 3, **caractérisée en ce que** le dispositif d'affichage (346) est agencé sur un premier côté d'un boîtier de machine qui fournit un accès à l'optique de guidage de faisceau (306), et **en ce que** la caméra (344) est agencée dans une zone au niveau ou à proximité d'un second côté du boîtier de machine, dans lequel se trouve un dispositif de retenue (102) pour au moins un maître (104) et dans lequel l'exposition d'hologramme est effectuée.

5. Machine d'exposition d'hologramme (300) selon l'une quelconque des revendications 1 à 4, **caractérisée en ce que** le maître (104) dans la zone d'exposition (204) présente au moins un point de référence (122) détectable optiquement par la caméra (344), et **en ce que** l'optique de guidage de faisceau (306) est configurée afin de régler au moins un faisceau de lumière de la lumière (400A, 400B) à l'aide du point de référence (122) du maître (104).

6. Procédé d'ajustement d'une machine d'exposition d'hologramme (300) selon l'une quelconque des revendications 1 à 5, comprenant les étapes suivantes :
- l'introduction d'un maître (104) pourvu d'au moins un point de référence (122) dans une zone d'exposition (204) dans laquelle l'exposition d'hologramme est effectuée,
- la détection optique de la zone d'exposition (204) au moyen d'une caméra (344) et l'affichage de l'image détectée par la caméra (344) au niveau d'un dispositif d'affichage (346),
- l'injection au moins d'un faisceau de lumière de lumière (400A, 400B) d'une source de lumière (304A, 304B) dans la zone d'exposition (204) au moyen d'une optique de guidage de faisceau (306), et
- la vérification à l'aide de l'image détectée par la caméra (344) indiquant si le faisceau de lumière est incident sur le point de référence (122) au niveau du maître (104) et présente la répartition d'intensité souhaitée.

7. Procédé selon la revendication 6, **caractérisé en ce que** l'optique de guidage de faisceau (306) est modifiée par rapport à son réglage sous surveillance optique avec la caméra (344) tant que le faisceau de lumière est incident sur le point de référence (122) au niveau du maître (104) et présente la répartition d'intensité souhaitée.
